**Europäisches Patentamt**

**European Patent Office**

**Office européen des brevets**

(11) Veröffentlichungsnummer : **0 344 486 B1**

# (12) EUROPÄISCHE PATENTSCHRIFT

(45) Veröffentlichungstag der Patentschrift :
**22.04.92 Patentblatt 92/17**

(51) Int. Cl.$^5$ : **E04F 13/14, B32B 17/12**

(21) Anmeldenummer : **89108277.8**

(22) Anmeldetag : **09.05.89**

(54) Glasverbundplatte für Gebäudeverkleidung.

(30) Priorität : **01.06.88 DE 3818557**

(43) Veröffentlichungstag der Anmeldung :
**06.12.89 Patentblatt 89/49**

(45) Bekanntmachung des Hinweises auf die
Patenterteilung :
**22.04.92 Patentblatt 92/17**

(84) Benannte Vertragsstaaten :
**AT BE CH DE ES FR GB GR IT LI LU NL SE**

(56) Entgegenhaltungen :
**FR-A- 1 288 114**
**FR-A- 2 092 669**
**GB-A- 446 515**
**US-A- 2 223 721**
**US-A- 4 233 796**

(73) Patentinhaber : **GLASWERKE ARNOLD GMBH**
**& CO. KG**
**Industriestrasse 19**
**W-8820 Gunzenhausen (DE)**

(72) Erfinder : **Mann, Detlef, Dipl.-Ing.**
**Sichlingerstrasse 19**
**W-8820 Gunzenhausen (DE)**

(74) Vertreter : **Böhme, Volker, Dipl.-Ing. et al**
**Patentanwälte Dipl.-Ing. E. Kessel Dipl.Ing. V.**
**Böhme Karolinenstrasse 27**
**W-8500 Nürnberg 1 (DE)**

## Beschreibung

Die Erfindung betrifft eine Glasverbundplatte für Gebäudeverkleidung, bei der eine dickere Glasscheibe mittels einer Kunststoff-Klebeschicht mit einer plattengroßen dünneren Lage ganzflächig verbunden ist, wobei die Klebeschicht an der Glasscheibe und der plattengroßen Lage unmittelbar angreift und die dünnere Lage von einem Metallblech gebildet ist, dessen Dicke gleich dem oder kleiner als das 0,4-fache der Glasscheibe ist.

Bei einer bekannten (FR-A-1 288 114) Glasverbundplatte dieser Art ist das Metallblech von Aluminium gebildet. Bei den Temperaturen, denen eine Glasverbundplatte in der Praxis ausgesetzt ist, wird diese bekannte Glasverbundplatte bimetallartige Krümmungen aufweisen, da das Aluminiumblech von der Glasscheibe in der thermischen Ausdehnung stark verschieden ist. In manchen Fällen ist es erwünscht, daß durch die sichtseitige Glasscheibe hindurch ein besonderer Farbton sichtbar ist, der mit einem rückseitigen Aluminiumblech nicht zu verwirklichen ist.

Man hat auch schon eine undurchsichtige Sicherheits-Glasscheibe für Gebäudeverkleidung geschaffen, indem die Glasscheibe als bei Bruch zerkrümelndes Sicherheitsglas ausgebildet ist und auf einer Seite mit einer Emailbeschichtung versehen ist. Hierbei ist die Glasoberfläche unruhig und zerfällt die Glasscheibe bei Bruch in Krümel. Im Gegensatz dazu läßt sich bei einer Glasverbundplatte der eingangs genannten Art die äußere Glasscheibe aus Floatglas herstellen, das eine ruhige Glasoberfläche hat. Die Splitter, die bei Bruch der vorderen Floatglasscheibe anfallen, werden durch die ganzflächige Verklebung der Glasverbundplatte gehalten und können nicht herabfallen.

Eine Aufgabe der Erfindung ist es daher, eine Glasverbundplatte der eingangs genannten Art zu schaffen, deren dünnere Lage auf einfache Weise die Brandschutzeigenschaften verbessert, Undurchsichtigkeit gewährleistet und an der Glasscheibe spezielle Farbtöne ermöglicht. Die erfindungsgemäße Glasverbundplatte ist, diese Aufgabe lösend, dadurch gekennzeichnet, daß das Metallblech von einem ferritischen Chromstahl gebildet ist, sich in der thermischen Ausdehnung maximal um $3.10^{-6}$ $K^{-1}$ von der Glasscheibe unterscheidet und maximal 0,5 mm dick ist.

Das Metallblech verbessert die Brandschutzeigenschaften, gewährleistet Undurchsichtigkeit und ermöglicht an der Sichtseite spezielle Farbtöne. Durch die Beschränkung der Dicke des rückseitigen Metallbleches auf das 0,4-fache der sichtseitigen Glasscheibe ist das Gesamtgewicht der Glasverbundplatte in einem brauchbaren Bereich gehalten und ist eine ausreichende Festigkeit des Metallbleches gewährleistet. Durch die Anpassung der thermischen Ausdehnung des Metallbleches an die der Glasscheibe sind bei der Herstellung und beim Gebrauch temperaturbedingte bimetallartige Krümmungen der Glasverbundplatte ausreichend klein gehalten, da stärkere temperaturbedingte bimetallartige Krümmungen zur Unbrauchbarkeit einer Glasverbundplatte aus einer Glasscheibe und einem Metallblech führen. Ferritische Chromstähle haben eine thermische Ausdehnung von $\leqq 10,0 \cdot 10^{-6}$ $k^{-1}$ und stehen damit in einem günstigen Verhältnis zu einem Floatglas mit einer thermischen Ausdehnung von $8,7 \cdot 10^{-6}$ $k^{-1}$.

Durch die splitterbindenden Eigenschaften des Metallbleches in Verbindung mit der Klebeschicht ist die erfindungsgemäße Glasverbundplatte sicherheitstechnisch von Vorteil. Der Glas-Blech-Verbund ergibt besondere Stabilität im Brandfall. Das Metallblech ist in der Dicke so an die Glasscheibe angepaßt, daß die erfindungsgemäße Glasverbundplatte trotz des Metallbleches auf üblichen Glassägen, Glasbohrmaschinen und Glaspoliermaschinen be- und verarbeitet werden kann.

Die Ausdehnungskoeffizienten der verwendbaren Metallbleche liegen etwa bei $5,2 - 12,2 \cdot 10^{-6}$ $k^{-1}$. Der Ausdehnungskoeffizient der in Betracht zu ziehenden Metallbleche ist in der Regel größer als der der in Betracht zu ziehenden Gläser. Besonders zweckmäßig und vorteilhaft es es, wenn das Verhältnis des Ausdehnungskoeffizienten des Metallbleches zum Ausdehnungskoeffizienten der Glasscheibe $\leqq 1,4$, vorzugsweise $\leqq 1,2$ ist. Hierbei sind Glasscheibe und Metallblech im Hinblick auf die Vermeidung bimetallartiger Krümmungen besonders gut aneinander angepaßt.

Besonders zweckmäßig und vorteilhat ist es auch, wenn das Metallblech maximal 0,5 mm, vorzugsweise maximal 0,3 mm dick ist. Metallbleche mit dieser Dicke machen sich bei der Bearbeitung der erfindungsgemäßen Glasverbundplatte auf herkömmlichen Glasbearbeitungsmaschinen nicht störend bemerkbar und gewährleisten doch befriedigende Festigkeit der Glasverbundplatte. Über eine Blechdicke von 1 mm oder vorzugsweise 0,75 mm wird im Rahmen der Erfindung jedenfalls nicht hinausgegangen.

Die erfindungsgemäße Glasverbundplatte weist eine Größe von mindestens 0,5 m² und eine Seitenlänge von mindestens 50 cm auf. Sie ist nicht nur zur Gebäudeverkleidung geeignet, sondern auch zur Verkleidung von Brüstungen und für andere Verwendungszwecke als Verkleidung. Die Glasverbundplatte ist in der Regel plan bzw. eben und aus einwandfrei planen Glasscheiben und Metallblechen zusammengesetzt.

Die sichtseitige Glasscheibe ist z.B. 4 mm dick. Besonders zweckmäßig und vorteilhaft ist es, wenn die Dicke des Metallbleches $\leqq$ das 0,2-fache, vorzugsweise $\leqq$ das 0,15-fache, der Glasscheibe ist. Auch dies bringt noch die erwünschten Eigenschaften in einem befriedigenden Umfang. Dabei wird das Metallblech im Hinblick auf die erwünschte Festigkeit nicht beliebig dünn sein können, sondern stets ein Blech sein und eine Dicke von 0,05 mm oder mehr aufweisen.

Die Kunststoff-Klebeschicht ist in der Regel eine thermoplastische Klebefolie. In der Regel wird eine Klebefolie verwendet, die durchsichtig oder durchscheinend ist. Es kann jedoch auch eine undurchsichtige Klebefolie verwendet werden. Diejenigen Klebefolien, die zum Verkleben zweier Glasscheiben geeignet sind, sind auch zum Verkleben der Glasscheibe mit dem Metallblech geeignet. Es gibt geeignete Klebefolien auf der Basis von Polyvinylbutyral oder auf der Basis von Polyurethan. Die Klebefolie ist z.B. 0,38 mm dick und besteht zumeist aus mehreren Folienlagen.

Es ist auch möglich, die Kunststoff-Klebeschicht aus aufgegossenem Gießharz zu fertigen. Die Gießharze für eine solche Schicht sind Duromere und sind z.B. auf der Basis von Polyester oder Polyacryl hergestellt. Die Klebefolie bringt eine größere Shore-Härte und läßt die Verbindung mehrerer Glasscheiben zu. Die Gießharzschicht bringt bessere Schalldämmung. Die Klebeschicht kann, z.B. wenn sie von Gießharz gebildet ist, Randstreifen der aneinanderliegenden Flächen von Glasscheibe und Metallblech freilassen bzw. aussparen.

Im Rahmen der Erfindung besteht die Glasscheibe in der Regel aus bei Bruch splitterndem Floatglas und weist eine thermische Ausdehnung von 8,2 - 9,2 · $10^{-6}$ $k^{-1}$ auf. Die Glasscheibe ist z.B. normal klar oder durch und durch gefärbt. Es ist auch möglich, die Glasscheibe auf der Rückseite mit einer Beschichtung, z.B. einer pyrolitischen Beschichtung zu versehen, die farbliche, reflektierende oder absorbierende Eigenschaften hat und optisch oder klimatechnisch von Vorteil ist.

In der Zeichnung ist eine bevorzugte Ausführungsform der Erfindung dargestellt und zeigt

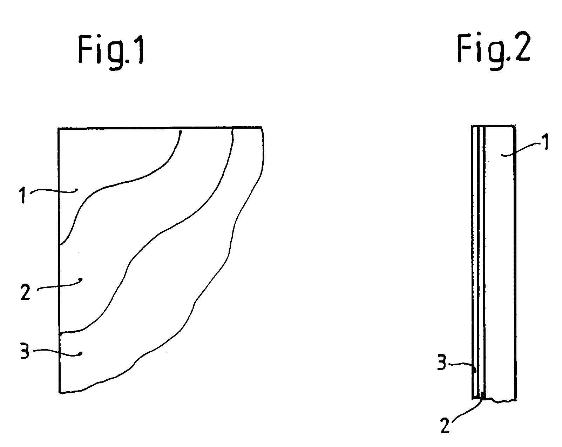

Fig. 1 eine Draufsicht mit Aufbrüchen einer Glasverbundplatte für Gebäudeverkleidung und

Fig. 2 eine Seitenansicht der Glasverbundplatte gemäß Fig. 1.

Die Glasverbundplatte gemäß Zeichnung umfaßt eine Glasscheibe 1, eine Klebefolie 2 und ein Metallblech 3. Das Metallblech ist zumindest an der der Klebeschicht zugewendeten Seite unlackiert, so daß die Klebeschicht an einer metallischen Oberfläche des Metallbleches angreift.

## Patentansprüche

1. Glasverbundplatte für Gebäudeverkleidung, bei der eine dickere Glasscheib (1) mittels einer Kunststoff-Klebeschicht (2) mit einer plattengroßen dünneren Lage (3) ganzflächig verbunden ist, wobei die Klebeschicht an der Glasscheibe und der plattengroßen Lage unmittelbar angreift und die dünnere Lage von einem Metallblech (3) gebildet ist, dessen Dicke gleich oder kleiner das 0,4-Fache der Glasscheibe (1) ist, dadurch gekennzeichnet, daß das Metallblech (3) von einem ferritischen Chromstahl gebildet ist, sich in der thermischen Ausdehnung maximal um 3.$10^{-6}$ $K^{-1}$ von der Glasscheibe (1) unterscheidet und maximal 0,5 mm dick ist.

2. Glasverbundplatte nach Anspruch 1, dadurch gekennzeichnet, daß das Verhältnis des Ausdehnungskoeffizienten des Metallbleches (3) zum Ausdehnungskoeffizienten der Glasscheibe (1) $\leqq$ 1,4, vorzugsweise $\leqq$ 1,2, ist.

3. Glasverbundplatte nach Anspruch 1 oder 2, dadurch gekennzeichnet, daß das Metallblech (3) maximal 0,3 mm dick ist.

4. Glasverbundplatte nach einem der vorhergehenden Ansprüche, dadurch gekennzeichnet, daß die Dicke des Metallbleches (3) $\leqq$ das 0,2-fache vorzugsweise $\leqq$ das 0,15-fache der Glasscheibe (1) ist.

## Claims

1. Composite glass plate for cladding buildings, in which a relatively thick glass pane (1) is connected over the entire surface by means of a synthetic adhesive layer (2) to a relatively thin layer (3) the size of a plate, the adhesive layer acting directly on the glass pane and the layer the size of a plate, and the relatively thin layer being formed from a metal sheet (3) whereof the thickness is less than or equal to 0.4 times that of the glass pane (1), characterized in that the metal sheet (3) is formed from a ferritic chromium steel, has a heat expansion differing from that of the glass pane (1) by at most 3 x $10^{-6}$ $k^{-1}$ and is at most 0.5 mm thick.

2. Composite glass plate according to Claim 1, characterized in that the ratio of the coefficient of expansion of the metal sheet (3) to the coefficient of expansion of the glass pane (1) is $\leqq$ 1.4, preferably $\leqq$ 1.2.

3. Composite glass plate according to Claim 1 or 2, characterized in that the metal sheet (3) is at most 0.3 mm thick.

4. Composite glass plate according to one of the preceding claims, characterized in that the thickness of the metal sheet (3) is $\leqq$ 0.2 times, preferably $\leqq$ 0.15 times, that of the glass pane (1).

**Revendications**

1. Plaque composite en verre pour revêtement de bâtiments, dans laquelle une vitre (1) relativement épaisse est fixée sur toute sa surface à une couche (3) relativement mince de la taille de la plaque au moyen d'une couche adhésive (2) en matière plastique, la couche adhésive agissant directement sur la vitre et la couche de la taille de la plaque, et la couche relativement mince étant constituée par une tôle métallique (3) dont l'épaisseur est $\leqq$ à 0,4 fois celle de 10 vitre (1), caractérisée en ce que la tôle métallique (3) est en un acier chromé ferritique dont la dilatation thermique se différencie au maximum de 3 . $10^{-6}$ $k^{-1}$ de celle de la vitre (1) et qui a une épaisseur maximale de 0,5 mm.

2. Plaque composite en verre selon la revendication 1, caractérisée en ce que le rapport du coefficient de dilatation de la tôle métallique (3) au coefficient de dilatation de la vitre (1) est $\leqq$ à 1,4, de préférence $\leqq$ à 1,2.

3. Plaque composite en verre selon la revendication 1 ou 2, caractérisée en ce que la tôle métallique (3) a une épaisseur maximale de 0,3 mm.

4. Plaque composite en verre selon l'une des revendications précédentes, caractérisée en ce que l'épaisseur de la tôle métallique (3) est $\leqq$ à 0,2 fois, de préférence $\leqq$ à 0,15 fois celle de la vitre (1).

# Fig.1

# Fig.2